# EUROPÄISCHE PATENTSCHRIFT

(11) **EP 4 196 284 B1**
(45) Veröffentlichungstag und Bekanntmachung des Hinweises auf die Patenterteilung: **17.07.2024**
(21) Anmeldenummer: 21758092.7
(22) Anmeldetag: 05.08.2021
(51) Int. Cl.: B04B 7/02, B04B 9/12, B04B 9/04, B04B 7/08, B04B 1/08

(54) **SEPARATOREINSATZ, SEPARATOR UND VERFAHREN ZUM WECHSELN EINES SEPARATOREINSATZES**
SEPARATOR INSERT, SEPARATOR, AND METHOD FOR EXCHANGING A SEPARATOR INSERT
INSERT DE SÉPARATEUR, SÉPARATEUR, ET PROCÉDÉ D'ÉCHANGE D'UN INSERT DE SÉPARATEUR

(30) Priorität: 14.08.2020 DE 102020121419
(43) Veröffentlichungstag der Anmeldung: 21.06.2023
(73) Patentinhaber: GEA Westfalia Separator Group GmbH, 59302 Oelde (DE)
(72) Erfinder: SCHULZ, Andreas, 59269 Beckum (DE); HELMRICH, Kai, 48317 Drensteinfurt (DE); QUITER, Kathrin, 48317 Drensteinfurt (DE); GÖHMANN, Rüdiger, 59302 Oelde (DE)
(74) Vertreter: Specht, Peter
(86) Internationale Anmeldenummer: PCT/EP2021/071879
(87) Internationale Veröffentlichungsnummer: WO 2022/033954

(56) Entgegenhaltungen:
- EP-A1- 3 666 394
- WO-A1-2014/000829
- DE-A1- 102017 128 027

## Beschreibung

Die Erfindung betrifft einen Separatoreinsatz für einen Separator einen Separator mit einem solchen Separatoreinsatz und ein Verfahren zum Wechseln eines Separatoreinsatzes.

Separatoren im Sinne dieser Schrift dienen zur Trennung einer fließfähigen Suspension als Ausgangsprodukt im Zentrifugalfeld in Phasen verschiedener Dichte. Bei verschiedensten Anwendungen ist eine Dampfsterilisation der eingesetzten Separatoren erforderlich. Ein relativ "kleiner" am Markt über die Anmelderin eingeführter dampfsterilisierbarer Separator mit Tellerpaket ist der Separator "CSC 6" mit 6000 m² äquivalenter Klärfläche. In manchen Situationen, so im Labor, ist diese Maschine jedoch noch relativ groß. Die bekannten Separatoren mit Tellerpaket, die auf dem Markt verfügbar sind, werden mittels einer Spindel angetrieben, die wiederum direkt oder über ein Getriebe von einem Motor angetrieben wird. Zudem bestehen die bekannten Maschinen aus Edelstahl. Aus diesen Gründen werden aktuell in Laboren sehr häufig Filter statt Zentrifugalseparatoren eingesetzt. Bei einem Separator mit einem Tellerpaket und mit Einwegkomponenten aus Kunststoff (Single-Use-Technologie - Einmalverwendung vorqualifizierter Kunststoffteile) wäre die Dampfsterilisation (SIP - Sterilization In Place) nicht erforderlich. Er könnte sich insbesondere zum Einsatz in der Biotechnologie eignen.

Aus der WO 2014/000829 A1 ist ein Separator zur Trennung eines fließfähigen Produktes in verschiedene Phasen bekannt, der eine drehbare Trommel mit einem Trommelunterteil und einem Trommeloberteil aufweist und ein in der Trommel angeordnetes Mittel zum Verarbeiten einer Suspension im Zentrifugalfeld von Feststoffen bzw. zum Trennen einer schweren feststoffartigen Phase von einer leichteren Phase im Zentrifugalfeld, wobei eines, mehrere oder sämtliche folgender Elemente aus Kunststoff oder einem Kunststoff-Verbundwerkstoff bestehen: das Trommelunterteil, das Trommeloberteil, das Mittel zum Klären. Derart ist es möglich, einen Teil der Trommel oder vorzugsweise sogar die gesamte Trommel - vorzugsweise nebst den Zulauf- und Ablaufsystemen bzw. -bereichen - für eine Einmalverwendung auszulegen, was insbesondere in Hinsicht für die Verarbeitung pharmazeutischer Produkte wie Fermentationsbrühen oder dgl. von Interesse und Vorteil ist, da nach dem Betrieb zur Verarbeitung einer entsprechenden Produktcharge im während der Verarbeitung der Produktcharge vorzugsweise kontinuierlichen Betrieb keine Reinigung der produktberührenden Teile der Trommel durchgeführt werden muss sondern diese insgesamt ausgetauscht werden kann. Gerade aus hygienischer Sicht ist dieser Separator damit sehr vorteilhaft. Um eine physische Trennung zwischen dieser Einweg-Trommel und dem Antrieb zu erreichen, ist eine berührungsfreie Kupplung zwischen Antrieb und Trommel vorteilhaft.

Eine Weiterentwicklung zeigt die gattungsgemäße DE 10 2017 128 027. Hier sind die Lagereinrichtungen als Magnetlager ausgebildet und eine der Magnetlagereinrichtungen wird vorzugsweise auch als Antriebsvorrichtung zum Drehen der Trommel genutzt, die im Betrieb in der Schwebe gehalten wird. Damit entfallen mechanische Komponenten zum Drehen und Lagern der Trommel, was die Ausbildung als Separator mit einem Separatoreinsatz zur einmaligen Verwendung begünstigt, da ein Austausch dieses Separatoreinsatzes sehr einfach zu handhaben ist. Diese Vorteile nutzt auch die vorliegende Erfindung.

Vor diesem Hintergrund ist es die Aufgabe der Erfindung, bei einem gattungsgemä-ßen Separatoreinsatz - der als Einwegelement nutzbar ist bzw. ausgebildet werden kann - so auszubilden, dass der Trennprozess besser beherrschbar wird

Die Erfindung löst diese Aufgabe durch den Gegenstand des Anspruchs 1, also durch einen Separator mit einem Gestell und einem an dem Gestell wechselbar angeordneten Separatoreinsatz, wobei der Separatoreinsatz zur Trennung einer fließfähigen Suspension in einem Zentrifugalfeld in wenigstens zwei fließfähige Phasen verschiedener Dichte ausgelegt ist und eine vormontierte, wechselbare Einheit zum Einsetzen in Statoreinheiten am Gestell des Separators bildet und zumindest folgendes aufweist: ein im Betrieb stillstehendes Gehäuse, das nach Art eines Behälters ausgelegt ist, der bis auf eine Mehrzahl an Öffnungen geschlossen ausgelegt ist, einen innerhalb des Gehäuses angeordneten und um eine Drehachse drehbaren Rotor mit einer Trommel, welche eine oder mehrere Öffnungen aufweist, vorzugsweise ein in der Trommel angeordnetes Trennmittel, zumindest zwei Rotoreinheiten für Magnetlagereinrichtungen an zwei axial beabstandeten Stellen des Rotors mit der Trommel, mit welchen der Rotor mit der Trommel im Betrieb innerhalb des Gehäuses in der Schwebe haltbar, drehbar lagerbar und in Drehung versetzbar ist, wobei ferner an dem Gestell voneinander beabstandete Aufnahmen mit Statoreinheiten der Lagereinrichtungen ausgebildet sind, zwischen welchen das Gehäuse des Separatoreinsatzes drehfest gehalten ist, so dass der Rotor drehbar bleibt, wobei die relative Lage der Aufnahmen mit den Statoreinheiten der Lagereinrichtungen derart veränderbar ist, dass der Separatoreinsatz auswechselbar ist, wobei das Gehäuse und die Aufnahmen korrespondierende Formschlussmittel aufweisen, um das Gehäuse drehfest an den Aufnahmen zu halten.

"Im Betrieb" bedeutet während einer zentrifugalen Verarbeitung, wenn sich der Rotor dreht.

Nach Anspruch 1 ist es möglich, einen Separator zu schaffen, der ein Einwegmodul mit Einwegkomponenten "Trommel" und "Gehäuse" aufweist, wohingegen zumindest das Gestell sowie Teile der Lager- und Antriebsvorrichtung wiederverwendbar sein können. Durch Verändern der Lage können die korrespondierenden Formschlussmittel in und außer Eingriff gebracht werden, um den Separatoreinsatz zu wechseln. Die Erfindung ermöglicht die Herstellung eines Separators, bei dem ein Einweg-Separatoreinsatz verwendbar ist, der vorzugweise derart ausgebildet ist, dass sämtliche produktberührenden Komponenten aus Kunststoff oder anderen nichtmagnetischen Werkstoffen gefertigt sind, die nach einmaligem Gebrauch entsorgt werden können. Eine Reinigung nach Benutzung entfällt somit. Die Maschine und deren Betrieb können damit deutlich günstiger werden. Magnete können ggf. recycelt werden.

Dabei ist es einfach und sicher, dass an dem Gestell zueinander beabstandete Aufnahmen der Lagereinrichtungen ausgebildet sind, zwischen welche der Separatoreinsatz drehfest wechselbar einsetzbar ist.

Es kann weiter vorgesehen sein, dass der Separatoreinsatz form- und kraftschlüssig drehfest an dem Gestell befestigbar ist.

Es können die Aufnahmen und das Gehäuse nach einer besonders einfachen Variante als korrespondierende Formschlussmittel korrespondierende Stifte und Ausnehmungen aufweisen, um das Gehäuse drehfest an den Aufnahmen zu halten. Besonders einfach ist, wenn sich Aufnahmen und Stifte jeweils axial erstrecken.

Es kann dazu weiter vorgesehen sein, dass die Lage der Aufnahmen, insbesondere an der Konsole verstellbar ist, um den Separatoreinsatz wechseln zu können. Hierzu kann der relative Abstand der Aufnahmen verstellbar sein, es kann/können aber auch eine oder beide Aufnahmen klappbar, schwenkbar, drehbar oder verschiebbar ausgeführt werden, um den Separatoreinsatz zwischen die Aufnahmen platzieren zu können. Vorzugsweise ist nach einer Variante die relative vertikale Lage durch Verstellen des vertikalen relativen Abstands der Aufnahmen mit den Statoreinheiten der Lagereinrichtungen derart veränderbar, dass der Separatoreinsatz auswechselbar ist, so dass durch das Verstellen die korrespondierenden Formschlussmittel in und außer Eingriff bringbar sind.

Derart ist das Wechseln des Separatoreinsatzes nach dem Verarbeiten einer Charge jeweils einfach und schnell durchführbar.

Nach einer besonders einfachen ersten Variante kann nur die eine der beiden Aufnahmen verstellbar, insbesondere höhenverstellbar, an dem Gestell, insbesondere an der Konsole, angeordnet sein und die andere Aufnahme ortsfest an dem Gestell, insbesondere an der Konsole, angeordnet sein. Alternativ ist es möglich, dass beide Aufnahmen verstellbar, insbesondere höhenverstellbar, an dem Gestell insbesondere an der Konsole, angeordnet sind.

Es ist weiter insbesondere konstruktiv vorteilhaft und einfach, wenn eine oder beide Aufnahmen verschieblich an dem Gestell insbesondere an der Konsole, angeordnet ist/sind.

Weiter vorteilhaft ist, wenn beim Einsetzen des Separatoreinsatzes in eine oder beide der Aufnahmen einer oder mehrere axial abgehende Schläuche an dem Separatoreinsatz durch eine jeweilige Durchgangsöffnung der jeweiligen Aufnahme geführt sind.

Es ist dabei bevorzugt, da einfach und praktisch, dass die Rotoreinheiten an den beiden axialen Enden der Trommel angeordnet sind, und dass zwei korrespondierende Statoreinheiten am Gestell des Separators ausgebildet sind. Derart werden an beiden axialen Enden der Trommel Magnetlagereinrichtungen gebildet.

Hierbei ist es besonders vorteilhaft, dass erfindungsgemäß die funktional erforderliche Lage der Statoreinheiten und der Rotoreinheiten zueinander gut mechanisch sichergestellt ist. Dies betrifft besonders die genaue axiale und radiale Zentrierung der jeweils koaxial ineinander liegenden Stator- und Rotoreinheiten.

Die Erfindung schafft auch einen Separatoreinsatz zur Trennung einer fließfähigen Suspension in einem Zentrifugalfeld in wenigstens zwei fließfähige Phasen verschiedener Dichte, der eine vormontierte, wechselbare Einheit zum Einsetzen in Statoreinheiten am Gestell des Separators bildet und zumindest folgendes aufweist: ein im Betrieb stillstehendes Gehäuse, das nach Art eines Behälters ausgelegt ist, der bis auf eine oder eine Öffnungen geschlossen ausgelegt ist, einen innerhalb des Gehäuses angeordneten und um eine Drehachse drehbaren Rotor mit einer Trommel, welche eine oder mehrere Öffnungen aufweist, ein in der Trommel angeordnetes Trennmittel, zumindest zwei Rotoreinheiten für Magnetlagereinrichtungen an zwei axial beabstandeten Stellen der Trommel, mit welchen der Rotor mit der Trommel im Betrieb innerhalb des Gehäuses in der Schwebe haltbar, drehbar lagerbar und in Drehung versetzbar ist, wobei das Gehäuse Formschlussmittel aufweist, um das Gehäuse drehfest an einem Widerlager zu halten. Dieser Separatoreinsatz eignet sich insbesondere für einen Separator als Wechselmodul, wobei das Gestell, insbesondere dessen Aufnahmen, das bzw. die Widerlager bildet.

Die Erfindung schafft auch ein vorteilhaftes und einfaches Verfahren zum Wechseln eines ersten Separatoreinsatzes eines Separators nach einem der Ansprüche 1 bis 8 gegen einen zweiten Separatoreinsatz, mit folgenden Schritten:
a) Bereitstellen des Separators mit einem ersten am Gestell montierten ersten Separatoreinsatz,
b) Verstellen der relativen Lage, insbesondere des relativen Abstandes, der Aufnahmen und Lösen des Formschlusses zwischen Gestell und Separatoreinsatz und Herausnehmen des ersten Separatoreinsatzes aus den Aufnahmen;
c) Bereitstellen des zweiten Separatoreinsatzes (vor, bei oder nach den Schritten a) und b);
d) Einsetzen des anderen zweiten Separatoreinsatzes in die eine der Aufnahmen, so dass die korrespondierenden Formschlussmittel an einem Ende des Gehäuses und an einer der Aufnahmen ineinander greifen; und
e) Verstellen der relativen Lage, insbesondere des relativen Abstandes, der Aufnahmen, bis die korrespondierenden Formschlussmittel an beiden Enden des Gehäuses des Separatoreinsatzes und an den beiden Aufnahmen drehfest ineinander greifen.

Nach einer vorteilhaften Variante stellt mindestens eine der beiden Magnetlagereinrichtungen vorzugsweise auch den Drehantrieb für die Trommel dar, wobei dieser Antrieb auch geeignet ist die Trommel mit frei einstellbaren Drehzahlen bzw. frei wählbarer Drehrichtung anzutreiben. Dabei kann vorzugweise vorgesehen sein, dass eine oder beide Magnetlagereinrichtungen radial und axial lagernd wirken und den Rotor im Betrieb im Behälter zu diesem beabstandet in der Schwebe halten.

Im Zusammenspiel bilden die Rotor- und Statoreinheiten Magnetlagereinrichtungen aus. Mit diesen kann die Trommel axial und radial gelagert werden und in der Schwebe gehalten werden.

Nach einer weiteren vorteilhaften und konstruktiv besonders einfach umsetzbaren Variante ist ergänzend vorgesehen, dass eine weitere Öffnung der Trommel als freier radialer Auslass für eine zweite der fließfähigen Phasen aus der Trommel in das Gehäuse ausgelegt ist, aus dem sie ableitbar ist. Es kann dazu ferner vorteilhaft und einfach vorgesehen sein, dass dem freien Auslass eine Fang-Ringkammer des Gehäuses zugeordnet ist, die einen Ablauf aus dem Gehäuse aufweist.

Nach einer anderen vorteilhaften und konstruktiv besonders einfach umsetzbaren Variante kann aber auch ergänzend vorgesehen sein, eine weitere Öffnung der Trommel zur Ableitung der weiteren fließfähigen Phasen aus der Trommel als eine Schälscheibe auszubilden. Es kann dann vorteilhaft vorgesehen sein, dass die Schälscheibe ein Ableitungsrohr aufweist, das koaxial zum Zuleitungsrohr ausgebildet ist und koaxial zu diesem aus der Trommel und durch die Öffnung in der ersten axialen Begrenzungswand des Gehäuses geführt ist.

Um den Trennprozess gut zu beherrschen, das heißt steuern oder regeln zu können, kann ferner vorgesehen sein, dass der ersten Schälscheibe und/oder der zweiten Schälscheibe strömungsseitig - also ggf. jeweils ablaufseitig - ein Regelventil nachgeschaltet ist, das oder die von einer Steuereinrichtung ansteuerbar sind.

Es kann weiter bevorzugt vorgesehen sein, dass in der Trommel als Trennmittel ein Tellerpaket angeordnet ist und dass eine Schälscheibe konstruktiv raumsparend und einfach in der Trommel unterhalb des Verteilers und unterhalb des Tellerpakets angeordnet ist, also in einem Bereich, der sonst oft zum Befestigen einer Antriebsspindel benötigt wird, die hier nicht erforderlich ist. Diese Schälscheibe dient zur Ableitung der ersten fließfähigen Phase aus der Trommel.

Es ist bevorzugt - da konstruktiv einfach und sicher - dass die Rotoreinheiten für die Magnetlagereinrichtungen an den beiden axialen Enden der Trommel angeordnet sind und dass das Zulaufrohr und das Ablaufrohr der ersten Schälscheibe jeweils eine dieser beiden Rotoreinheiten axial durchsetzt.

Es ist besonders vorteilhaft und praktisch, dass der Separatoreinsatz als vormontierte Einheit ausgebildet ist. Dabei kann insbesondere auch vorgesehen sein, dass sämtliche produktberührenden Elemente dieses Einsatzes aus Kunststoff oder einem anderen nichtmagnetischen Material bestehen, wobei er als Ganzes wechselbar ist und nach Gebrauch vollständig entsorgt werden kann. Eine Reinigung und ggf. eine Dampfsterilisation des Separatoreinsatzes sind damit nicht mehr erforderlich.

Es kann die jeweilige Lagereinrichtung, die neben einer Radiallagerung auch eine Axiallagerung der Trommel und/oder einen Drehantrieb bewirkt, permanent-und/oder elektromagnetisch wirken.

Am Außenumfang ist das Zulaufrohr oder ein dieses umgebender Schälscheibenschaft vorzugsweise abgedichtet in das Gehäuse eingesetzt oder mit diesem einstückig ausgebildet.

Die Trommel kann einfach konisch oder doppeltkonisch ausgebildet sein. Sie kann ergänzend oder alternativ auch einen oder mehrere zylindrische Abschnitte aufweisen. Sie kann zudem aus mehreren Teilen, insbesondere einem Oberteil und einem Unterteil zusammengesetzt sein, wobei diese Teile vorzugsweise nach dem Einbau innerer Komponenten und ihrem Zusammenbau miteinander verbunden sind (z.B. durch Verkleben oder Verschweißen). Analog kann das Gehäuse aus mehreren Teilen, insbesondere einem Oberteil und einem Unterteil zusammengesetzt sein, wobei diese Teile vorzugsweise nach dem Einbau innerer Komponenten - insbesondere dem Rotor - und ihrem Zusammenbau miteinander verbunden sind (z.B. durch Verkleben oder Verschweißen).

Die Abläufe können Stutzen an der Außenseite des Gehäuses aufweisen, die am Außenumfang abgedichtet an diesem ausgebildet sind, so dass derart auf einfache Weise Schläuche oder dgl. anschließbar sind. Die Schläuche können auch bereits an den Stutzen vormontiert sein, so dass diese komplett und bei Bedarf keimfrei verschlossen sind. Die Stutzen können sich z.B. radial, tangential oder schräg zur Radialrichtung erstrecken.

Der gesamte Separatoreinsatz kann nach seiner Herstellung insofern auch als abgedichtete Einheit bereitgestellt werden, in welche keine Verunreinigungen eintreten können. Dazu können die Stutzen an den Öffnungen des Gehäuses abgedichtet lösbar verschlossen sein. So können an den Stutzen Schlauchabschnitte angeordnet sein, die öffenbare und verschließbare Konnektoren aufweisen, mit welchen der Separatoreinsatz an weitere Elemente des Zu- und Ablaufsystems wie Beutel oder Tanks oder Schlauch- oder Rohrleitungen anschließbar ist.

Diese Separatoren sind zum Betrieb bei variablen, auch relativ hohen Drehzahlen geeignet. Zudem kann er auch gut für eine Einmalverarbeitung - beispielsweise für eine zentrifugale Trennung einer Produktcharge einer fließfähigen Fermentationsbrühe als Suspension - von z.B. 100i bis einige Tausend, z.B. 4000 I - in verschiedene Phasen - genutzt werden und danach entsorgt werden. Dabei besteht ein besonderer Vorteil darin, dass alle produktberührenden Komponenten des Separators als vorgefertigte und bereits keimfreie Einheit eingebaut, betrieben und anschließend entsorgt werden können. Diese vorgefertigte Einheit besteht zumindest aus dem Rotor mit der Trommel, den Trenntellern, dem Zulaufverteiler und den Rotormagneten bzw. Rotoreinheiten, sowie dem Gehäuse mit den Zu- und Abläufen. Des Weiteren kann die Einheit zudem Zu- und Ablaufleitungen (bspw. Schläuche) sowie Messequipment oder weitere produktberührte Komponenten enthalten, die zum Einmalgebrauch vorgesehen sind und nach Benutzung zusammen mit der Separatoreinheit entsorgt werden.

Und schließlich kann weiter vorteilhaft vorgesehen sein, dass das Gehäuse ausschließlich die Öffnungen für Zulaufrohre und für Abläufe aufweist und ansonsten hermetisch geschlossen ausgebildet ist. Dazu kann vorgesehen sein, dass die Zulaufrohre und die Abläufe nach Art von Stutzen aus dem Gehäuse nach außenvorstehen, wobei diese Stutzen mit dem Gehäuse abgedichtet verbunden oder einstückig mit diesem ausgebildet sind.

Vorteilhafte Ausgestaltungen der Erfindung sind den übrigen Unteransprüchen zu entnehmen.

Nachfolgend wird die Erfindung anhand von Ausführungsbeispielen unter Bezug auf die Zeichnung näher beschrieben, wobei auch weitere vorteilhafte Varianten und Ausgestaltungen diskutiert werden. Es sei betont, dass die nachfolgend diskutierten Ausführungsbeispiele die Erfindung nicht abschließend beschreiben sollen, sondern dass auch nicht dargestellte Varianten und Äquivalente realisierbar sind und unter die Ansprüche fallen. Es zeigt:
- Figur 1:: eine schematische, schnittartige Darstellung eines ersten wechselbaren Separatoreinsatzes eines Separators nebst einer schematischen Darstellung eines Zu- und Ablaufsystems und einer Steuereinheit des Separators;
- Figur 2:: eine schematische, schnittartige Darstellung eines zweiten wechselbaren Separatoreinsatzes eines Separators nebst einer schematischen Darstellung eines Zu- und Ablaufsystems und einer Steuereinheit des Separators;
- Figur 3:: eine schematische Darstellung eines Separators mit einem wiederverwendbaren Gestell und einem wechselbaren Separatoreinsatz, letzterer hier nach Art der Fig. 1, mit daran angeordneten Schlauchabschnitten;
- Figur 4:: eine perspektivische Ansicht des wechselbaren Separatoreinsatzes aus Fig. 1 und 3 mit daran angeordneten Schlauchabschnitten;
- Figur 5-7:: drei aufeinander folgende Schritte bei einem Einsetzen des wechselbaren Separatoreinsatzes aus Fig. 4 in das Gestell der Fig. 3.
- Figur 8:: eine perspektivische Ansicht einer Abwandlung des wechselbaren Separatoreinsatzes

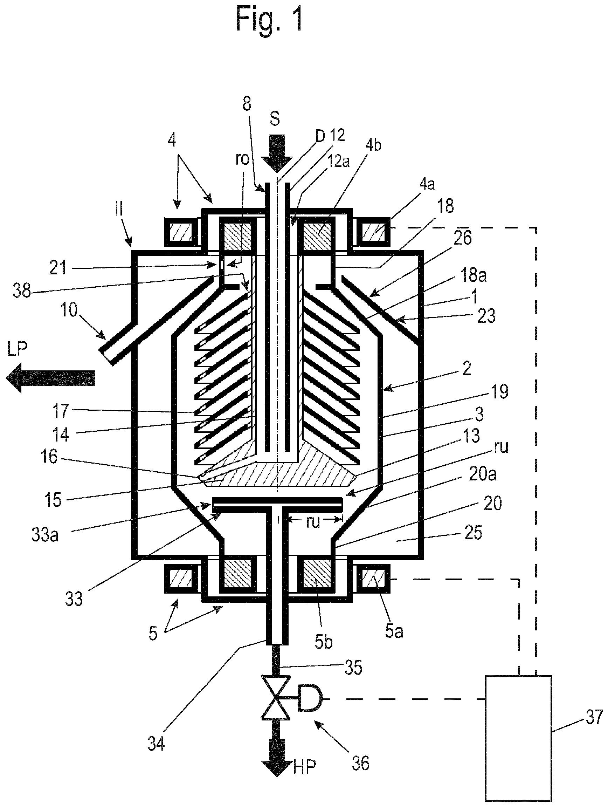

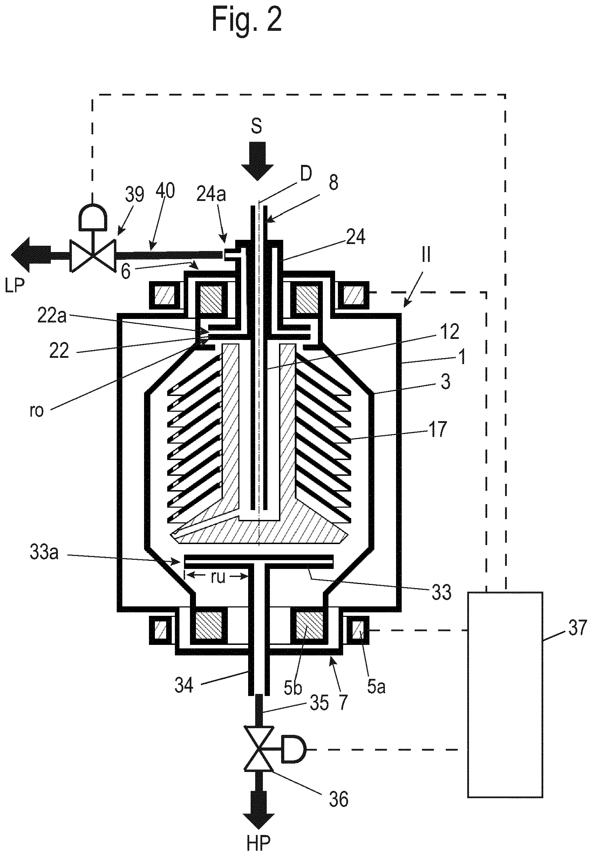

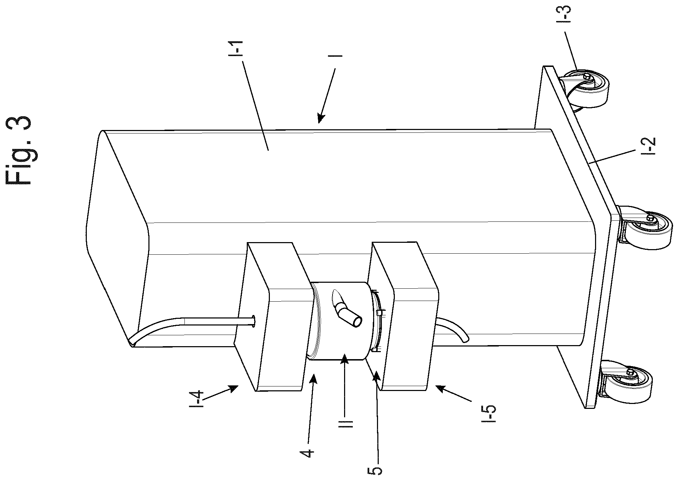

Figur 3 zeigt einen Separator mit einem mehrfach verwendbaren Gestell I und mit einem wechselbaren Separatoreinsatz II nach Art der Fig. 1 zur zentrifugalen Trennung eines Produktes - einer Suspension S - in verschiedene dichte Phasen HP, LP. Der Separatoreinsatz könnte auch nach Art der Fig. 2 ausgestaltet sein.

Der Separatoreinsatz II ist vorzugsweise als vorgefertigte Einheit ausgebildet. Insbesondere ist der Separatoreinsatz II als ein als Ganzes tauschbarer bzw. wechselbarer sowie als vormontierte Einheit ausgelegter Einweg-Separatoreinsatz ausgebildet, der ganz oder zum überwiegenden Teil aus Kunststoff- oder Kunststoff-Verbundwerkstoffen aufgebaut ist.

Der Separatoreinsatz (zu dem nicht die Elemente 4a und 5a gehören) ist separat beispielhaft in Figur 1 und 2 dargestellt. Er kann nach der Verarbeitung einer Produktcharge entsorgt und gegen einen neuen Separatoreinsatz II ausgetauscht werden kann.

Nach Fig 1 und 2 weist der Separatoreinsatz II des Separators jeweils ein Gehäuse 1 und den in das Gehäuse 1 eingesetzten, im Betrieb relativ zum Gehäuse 1 drehbaren Rotor 2 auf. Der Rotor 2 weist eine Drehachse D auf. Diese kann vertikal ausgerichtet sein, was dem Aufbau des Gestells I entspricht. Sie kann aber auch anders im Raum ausgerichtet werden, wenn das Gestell auch entsprechend gestaltet ist.

Der Rotor 2 des Separatoreinsatz II weist eine drehbare Trommel 3 auf. Der Rotor 2 ist an zwei axial zueinander in Richtung der Drehachse voneinander beabstandeten Orten mit jeweiligen Magnetlagereinrichtungen 4, 5 drehbar gelagert. Vorzugsweise ist der Rotor 2 bzw. es ist dann damit auch die Trommel 3 an den beiden axialen Enden drehbar gelagert. Der Separatoreinsatz II weist dabei Rotoreinheiten 4b, 5b der Magnetlagervorrichtungen 4, 5 auf. An dem Gestell I-1 sind hingegen Statoreinheiten 4a, 5a der Magnetlagereinrichtungen 4, 5 angeordnet.

Die Magnetlagereinrichtungen 4, 5 wirken bevorzugt radial und axial und halten den drehbar gelagerten Rotor 2 bevorzugt im Gehäuse 1 zu diesem beabstandet in der Schwebe.

Ein solcher Separator mit einem einfach wechselbaren Separatoreinsatz kann bei der Verarbeitung von Produkten sinnvoll und vorteilhaft sein, bei denen mit sehr hoher Sicherheit auszuschließen ist, dass während der zentrifugalen Verarbeitung Verunreinigungen in das Produkt - eine fließfähige Suspension oder seine Phasen - eingetragen werden oder bei denen eine Reinigung und Desinfektion des Separators sehr aufwendig oder gar nicht möglich wäre.

Das Gestell I weist eine Konsole I-1 auf. Diese kann - muss aber nicht - auf einem Wagen I-2 mit Rollen I-3 gelagert sein. An der Konsole I-1 können Aufnahmen I-4 und I-5 ausgebildet sein, die zur Aufnahme und zum Halten des Separatoreinsatzes II auch im Betrieb dienen. Vorzugsweise ragt ein erstes axiales Ende des Separatoreinsatzes II von unten in die obere Aufnahme I-4 ein oder an diese heran und ein unteres Ende des Separatoreinsatzes II ragt von oben in die andere Aufnahme I-5 ein oder an diese heran und dabei ist der Separatoreinsatz II an der Konsole I-1 und damit am Gestell I drehfest gehalten.

Eine oder beide der Aufnahmen I-4 und/oder I-5 kann/können seitlich an dem Gestell I, insbesondere der Konsole I-1, angeordnet sein. Es kann dabei nach einer Variante weiter vorgesehen sein, dass z.B. die untere Aufnahme I-5 ortsfest an der Konsole I-1 ausgebildet ist. Es ist dann vorteilhaft, dass die weitere obere Aufnahme I-4 höhenverstellbar an der Konsole I-1 ausgebildet ist.

In diesem Fall ist es vorteilhaft, wenn die Konsole I-1 eine solche vertikale Erstreckung/Länge aufweist, dass der Separatoreinsatz in einer ersten Position der höhenverstellbaren Aufnahme I-4 von beiden höhenverstellbaren Aufnahmen I-4, I-5 ortsfest gehalten ist und in der anderen oberen Position wechselbar ist.

Es ist derart vorteilhaft vorgesehen, dass die Aufnahmen I-4 und I-5 mit den Statoreinheiten 4a, 5a am Gestell I axial auseinander und wieder aufeinander zu bewegt werden können, um den Separatoreinsatz II zu wechseln, d.h. um den alten Separatoreinsatz II aus dem Gestell I herausnehmen und gegen einen neuen austauschen zu können. Realisierbar ist dies beispielsweise mit einer Schiene an der Konsole und einem verschieblichen sowie in einer Schiebeposition arretierbaren Schlitten an der höhenverstellbaren Aufnahme (nicht im Detail dargestellt).

Es ist somit vorgesehen, dass der relative Abstand der Aufnahmen I-4 und I-5 mit den Statoreinheiten 4a, 4b der Lagereinrichtungen 4, 5 verstellbar ist, um den Separatoreinsatz II wechseln zu können.

In den jeweiligen Aufnahmen I-4 und I-5 können jeweilige Stator-Einheiten 4a, 5a von zwei Antriebs- und Magnetlagereinrichtungen 4 und 5 angeordnet sein. Die Steuer-und Leistungselektronik hierfür kann im oder am Gestell I, z.B. in, an oder auf der Konsole I-1 angeordnet sein.

An den Aufnahmen I-4 und I-5 und an einem sich im Betrieb nicht drehenden Gehäuse 1 des Separatoreinsatzes II können korrespondierende Formschlussmittel ausgebildet sein, um den Separatoreinsatz II drehfest in die Statoreinheiten 4a, 5a einsetzen zu können. Die obere und die untere Statoreinheit 4a, 5a können jeweils miteinander fluchtende Achsen aufweisen.

Nach einer besonders einfachen Variante können dazu das Gehäuse 1 und die Aufnahmen I-4 oder I-5 mit den Statoreinheiten 4a, 5a als die korrespondierenden Formschlussmittel Vorsprünge (z.B. Stifte oder Stege) und Ausnehmungen (z.B. Bohrungen) aufweisen, um das Gehäuse 1 drehfest an den Statoreinheiten und damit am Gestell II zu halten. Die korrespondierenden Formschlussmittel können auch direkt am Gestell II ausgebildet sein.

Die Lage dieser korrespondierenden Formschlussmittel definiert auch die funktional erforderliche Lage der Statoreinheiten 4a, 5a und der Rotoreinheiten 4b, 5b zueinander. Dies betrifft besonders die genaue Zentrierung der jeweils koaxial ineinanderliegenden Einheiten 4a, 5a und 4b, 5b. Dabei kann durch die Aufnahmen ggf. auch in axialer Richtung eine Haltekraft (von oben und unten) auf das Gehäuse ausgeübt werden um dieses ggf. auch kraftschlüssig zu halten.

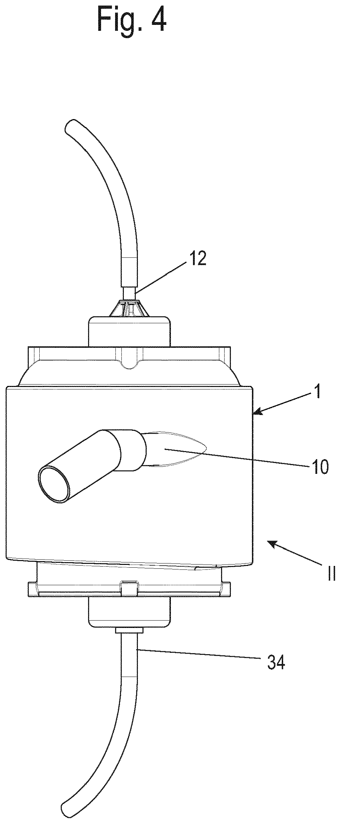

Nach Fig. 3 bis 7 werden die vorstehenden Maßnahmen beispielhaft wie folgt umgesetzt.

Die Aufnahmen I-4 und I-5 mit den Statoreinheiten 4a, 5a des Gestells I weisen jeweils in axialer Richtung vorkragend mehrere Stifte 41a auf, und der jeweilige Separatoreinsatz II kann am Gehäuse 1 dazu korrespondierende, sich beispielsweise in axialer Richtung erstreckende Sacklöcher als Ausnehmungen 42 bzw. 41b aufweisen.

Dabei weist hier die Aufnahme I-4 mit der Statoreinheit 4a axial bzw. hier vertikal nach unten vorkragende Stifte 41 auf (hier nicht zu erkennen) und der Separatoreinsatz II vertikal oben korrespondierende sacklochartige Ausnehmungen 42 (hier zu erkennen) und die untere Aufnahme I-5 mit der untere Statoreinheit 5a weist entsprechend axial bzw. hier vertikal nach oben vorkragende Stifte 41a auf (hier zu erkennen) und der Separatoreinsatz II axial unten korrespondierende sacklochartige Ausnehmungen (hier nicht zu erkennen). Rein beispielhaft sind hier jeweils vier Stifte 41a und Ausnehmungen 41b auf den Ecken eines gedachten Mehrecks, insbesondere Quadrates verteilt angeordnet und zwar oben und unten jeweils an den Aufnahmen I-4, I-5 und dem Gehäuse 1 des Separatoreinsatz II ausgebildet. In Fig. 3-7 sind entsprechende Formschlussmittel 41a, 41b und 42 umfangsverteilt um den Separatoreinsatz II angeordnet. Es ist allerdings auch möglich, dass lediglich ein Formschlussmittel anstelle mehrerer Formschlussmittel vorgesehen ist.

Die korrespondierenden Formschlussmittel können aber auch unsymmetrisch angeordnet sein, um sicherzustellen, dass der Separatoreinsatz nur in einer einzigen Orientierung eingesetzt werden kann.

Die Statoreinheiten 4a, 5a können zu dem jeweils Öffnungen, insbesondere Durchgangsöffnungen 43 aufweisen, um nach oben und/oder unten hin Leitungen wie z.B. Schläuche 44, 45 die an den Separatoreinsatz II angeschlossen sind, aufzunehmen.

Eine oder beide Aufnahmen I-4 und I-5 ist/sind vertikal verstellbar ausgebildet. Eine der beiden Aufnahmen I-4 oder I-5 kann insofern auch fix am Gestell I ausgebildet sein. So ist es auch denkbar, dass eine der beiden Aufnahmen I-4 oder I-5 - z.B. die untere - an einer Wand des Gestells I ausgebildet ist und unverstellbar ist. Es genügt dann, das Gestell I so auszubilden, dass die jeweiligen andere Aufnahmen I-4 oder I-5 verstellbar ist, insbesondere vertikal höhenverstellbar an dem Gestell I angeordnet und/oder ausgebildet ist.

Gut zu erkennen ist dies aus dem Zusammenspiel der Fig. 3 bis 7.

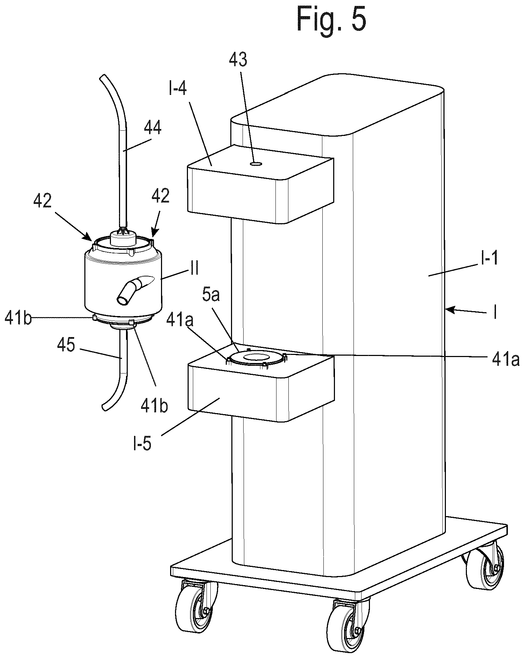

Fig. 5 zeigt das Gestell I vor dem Einsetzen eines Separatoreinsatzes II.

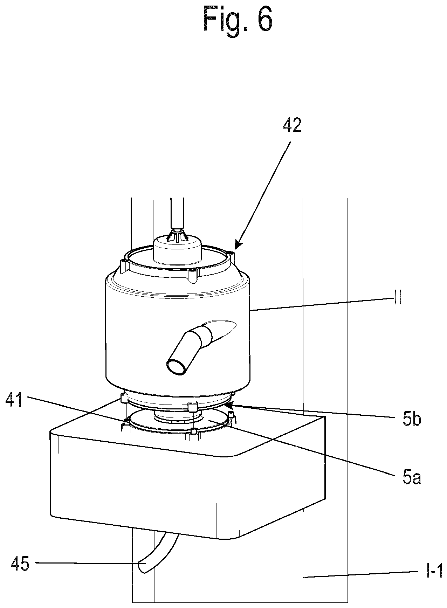

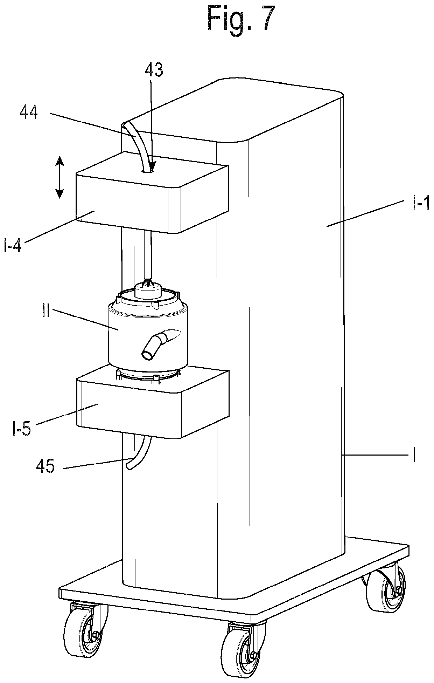

Die beiden Statoreinheiten 4a, 5a sind relativ zueinander so weit auseinander bewegt worden, dass der jeweilige Separatoreinsatz axial zwischen die zwei Aufnahmen mit den Statoreinheiten 4a, 5a gehoben werden kann (Fig. 5, 6), wobei dann der Separatoreinsatz II so in/an die untere Aufnahme I-5 gesetzt wird (Fig. 6 und 7), dass die korrespondierenden Formschlussmittel - hier 41, 42 - ineinander greifen. Zudem ist der Schlauch 45 am unteren Ende des Gehäuses 1 nach unten hin durch die Durchgangsöffnung 43 der unteren - und somit axial zugehörigen - Statoreinheit 5a geführt worden (Fig. 6). Jetzt wird die obere Aufnahme I-4 abgesenkt, bis auch die korrespondierenden Formschussmittel der oberen Aufnahme I-4 und des Gehäuses 1 des Separatoreinsatzes I - hier 41, 42 - sicher ineinander greifen (Fig. 7). Dabei werden obere Schläuche 44 an dem Gehäuse 1 durch die Durchgangsöffnung 43 der oberen Aufnahme I-4 geführt. Jetzt ist der Separatoreinsatz II sicher am Gestell I drehfest gehalten. Daher kann der Schleuder- und Trennvorgang zum Verarbeiten einer Produktcharge im Zentrifugalfeld beginnen. Nach dem Verarbeiten der vorgesehenen Charge wird die obere Separatoreinheit wieder nach oben gehoben, bis die Separatoreinheit aus dem Gestell I herausgehoben und gegen eine neue gewechselt werden kann.

Nachfolgend sei unter Bezug auf Figur 1 und Fig. 2 der weitere Aufbau beispielhafter bevorzugter Separatoreinsätze II nebst dem Aufbau des Antriebs- und Lagersystems des Separators, der Steuerung des Separators und des Zu- und Ablaufsystems des Separators näher beschrieben. Die Erfindung ist darauf nicht beschränkt. Insbesondere die Zu- und Ableitungen können auch anders an dem Separatoreinsatz II realisiert werden.

Zunächst können die Rotoreinheiten 4b, 5b im Wesentlichen nach Art von Innenringen aus Magneten, insbesondere Permanentmagneten, ausgebildet sein und die wiederverwendbaren Statoreinheiten 4a, 5a, können im Wesentlichen nach Art von Außenringen, die zur axialen und radialen Lagerung des Rotors 2 (z.B. oben) oder alternativ auch zum Drehantrieb (z.B. unten) genutzt werden.

Somit stellen die Rotoreinheiten 4b und/oder 5b als Teil des Separatorantriebs auch einen Teil des rotierenden Systems bzw. Rotors dar. Anders ausgedrückt ist somit der Rotor des Antriebs ein Teil der Trommel des Zentrifugalseparators.

Eine oder beide der Magnetlagereinrichtungen 4, 5 wird/werden somit vorzugsweise ergänzend auch als Antriebsvorrichtung zum Drehen des Rotors 2 mit der Trommel 3 im Gehäuse 1 genutzt. In diesem Fall bildet die jeweilige Magnetlagereinrichtung eine kombinierte Magnetlager- und Antriebseinrichtung aus. Die Magnetlagereinrichtungen 4, 5 können als Axial- und/oder Radiallager ausgebildet sein, welche die Trommel 3 an ihren Enden während des Betriebes insgesamt zusammenwirkend axial und radial lagern und insgesamt im Betrieb schwebend halten und drehen.

Die Magnetlagereinrichtungen 4 und 5 können vom grundsätzlichen Aufbau her gleich oder weitgehend gleich ausgebildet sein. Dabei kann insbesondere nur die eine der beiden Magnetlagereinrichtungen 4, 5 ergänzend auch als Antriebsvorrichtung Verwendung finden. Es sind somit jeweils korrespondierende Bauteile der Magnetlager 4, 5 am Separatoreinsatz II - an dessen Rotor 2 - und andere korrespondierende Teile am Gestell I ausgebildet. Eine oder beide Statoreinheiten 4a, 5a können dabei auch mit einer Steuer- und Leistungselektronik zum Ansteuern der elektromagnetischen Komponenten der Magnetlagereinrichtungen elektrisch verbunden sein.

Die jeweilige Magnetlagereinrichtung 4, 5 kann z.B. nach einem kombinierten elektro- und permanentmagnetischen Wirkprinzip arbeiten.

Vorzugsweise dient zumindest die untere axial wirkende Magnetlagereinrichtung 5 dazu, den Rotor 2 innerhalb des Gehäuses 1 axial durch Levitation in der Schwebe zu halten. Sie kann einen oder mehrere erste Permanentmagnete beispielsweise an der Unterseite des Rotors aufweisen und weiterhin an einer Aufnahme am Gestell Elektromagnete aufweisen, welche den oder die Permanentmagneten koaxial umgeben. Der Antrieb des Rotors kann elektromagnetisch erreicht werden. Es ist aber auch ein Antrieb über rotierende Permanentmagneten realisierbar.

Derartige Lager- und Antriebsvorrichtungen werden beispielsweise von der Firma Levitronix z.B. für den Antrieb von Zentrifugalpumpen verwendet (EP2 273 124 B1). Sie können auch im Rahmen dieser Schrift eingesetzt werden. Als Antrieb kann beispielsweise ein erster Levitronix-Motor "Unten" eingesetzt werden, der zugleich die Trommel magnetisch radial und axial lagert. Zudem kann ein zweiter - beispielsweise bis auf die Steuerung im Betrieb baugleicher - Levitronix-Motor vorgesehen sein, welcher als das Magnetlager 4 den Rotor 2 am Kopf radial und axial lagern kann.

Die Rotordrehzahl kann mit Hilfe einer Steuereinrichtung 37 (siehe Fig. 1 oder 2) oder einer dazu separaten Steuereinrichtung der Magnetlager 4, 5 variabel eingestellt werden. Ebenso kann die Drehrichtung des Rotors 2 derart vorgegeben und verändert werden.

Im Betrieb dreht sich der Rotor 2. Dabei wird er somit axial in der Schwebe gehalten und radial zentriert. Vorzugsweise wird der Rotor 2 mit der Trommel 3 mit einer Drehzahl zwischen 1.000, vorzugsweise 5.000 bis 10.000, ggf. auch bis zu 20.000 Umdrehungen pro Minute betrieben. Die aufgrund der Rotation entstehenden Zentrifugalkräfte führen zur bereits weiter oben beschriebenen Trennung einer zu verarbeitenden Suspension in verschiedene fließfähige Phasen LP, HP unterschiedlicher Dichte und zu deren Ableitung, wie weiter unten näher beschrieben. Dabei erfolgt die Verarbeitung der Produktcharge im kontinuierlichen Betrieb, was bedeutet, dass die aus der Suspension getrennten Phasen während des Betriebs vollständig wieder aus der Trommel abgeleitet werden.

Damit ist es sehr gut möglich, für einen Separator einen Separatoreinsatz nebst Gehäuse zu schaffen, der insgesamt für eine Einmalverwendung auslegt werden kann, was wiederum insbesondere in Hinsicht für die Verarbeitung pharmazeutischer Produkte wie Fermentationsbrühen oder dgl. von Interesse und Vorteil ist, da nach dem Betrieb zur Verarbeitung einer entsprechenden Produktcharge im während der Verarbeitung der Produktcharge vorzugsweise kontinuierlichen Betrieb keine Reinigung der Trommel durchgeführt werden muss, da der gesamte Separatoreinsatz austauschbar ist. Ggf. können einzelne Elemente wie Magnete geeignet recycelt werden (siehe auch die DE 10 2017 128 027 A1).

Das Gehäuse 1 besteht bevorzugt aus einem Kunststoff- oder aus einem Kunststoff-Verbundwerkstoff. Das Gehäuse 1 kann zylindrisch ausgebildet sein und einen zylindrischen Außenmantel aufweisen, an dessen Enden zwei sich radial erstreckende Begrenzungswände 6, 7 (Deckel und Boden) ausgebildet sind.

Die Trommel 3 dient zur zentrifugalen Trennung einer fließfähigen Suspension S im Zentrifugalfeld in zumindest zwei Phasen LP, HP verschiedener Dichte, die beispielsweise eine leichtere Flüssigkeitsphase und eine schwere Feststoffphase oder eine schwere Flüssigkeitsphase sein können.

Der Rotor 2 und seine Trommel 3 weisen in bevorzugter Ausgestaltung eine vertikale Drehachse D auf. Das Gehäuse 1 und der Rotor 2 könnten aber auch anders im Raum ausgerichtet werden. Die nachfolgende Beschreibung bezieht sich auf die dargestellte vertikale Ausrichtung (Fig. 3). Bei anderer Orientierung im Raum verändern sich die Ausrichtungen entsprechend der neuen Ausrichtung mit. Zudem werden ggf. einer oder beide Auslässe - noch zu erörtern - anders angeordnet.

Der Rotor 2 des Separators mit der Trommel 3 besteht vorzugsweise ganz oder überwiegend aus einem Kunststoff- oder aus einem Kunststoff-Verbundwerkstoff.

Die Trommel 3 wird bevorzugt jedenfalls abschnittsweise zylindrisch und/oder konisch ausgebildet. Analoges gilt für die weiteren Elemente in dem Rotor 2 und am Gehäuse 1 (bis auf Elemente der Magnetlagereinrichtungen 4, 5).

Das Gehäuse 1 ist nach Art eines Behälters ausgelegt, der vorteilhaft bis auf einige (noch zu erörternde) Öffnungen/Öffnungsbereiche hermetisch geschlossen ausgebildet ist.

Nach Fig. 1 und 2 ist in den beiden axialen Begrenzungswänden 6, 7, die hier beispielhaft oben und unten liegen, des Behälters 1 jeweils eine der Öffnungen ausgebildet.

Die eine der Öffnungen - in der ersten, hier oberen axialen Begrenzungswand 6 - ermöglicht bzw. dient nach Fig. 1 und 2 als Zulauf 8 zum Zuleiten einer im Zentrifugalfeld in wenigstens zwei Phasen unterschiedlicher Dichte - LP und HP - zu trennende Suspension durch das Gehäuse 1 bis in die Trommel 3.

Hier ist die erste Phase eine leichtere Phase LP und die zweite Phase eine im Vergleich zur ersten Phase dichtere, schwerere Phase HP.

Eine zweite der Öffnungen - in der zweiten, hier unteren axialen Begrenzungswand 7 - ermöglicht bzw. dient als Ablauf für die zweite schwerere Phase HP direkt aus der Trommel 3 durch das Gehäuse 1 hindurch.

Die Trommel 3 weist ebenfalls Öffnungen auf, die den Öffnungen des Gehäuses zugeordnet sind.

In eine obere Öffnung 12a an dem einen axialen Ende der Trommel 3 erstreckt sich ein Zulaufrohr 12 für eine zu verarbeitende Suspension. Dieses durchsetzt das Gehäuse 1, insbesondere dessen eine - hier obere - axiale Begrenzungswand 6. Am Außenumfang ist das Zulaufrohr 12 zum Gehäuse 1 hin nach Fig. 1 abgedichtet in dieses eingesetzt - z.B. schweißend oder klebend - oder ggf. einstückig mit dem Gehäuse als Kunststoffspritzteil ausgeführt. Es besteht vorzugsweise ebenfalls aus Kunststoff. Das Zulaufrohr 12 steht mit einem Ende aus dem Gehäuse 1 oben nach außen vor und erstreckt sich durch die obere Begrenzungswand 6 hindurch bis in die Trommel 3, wobei es die Trommel 3 nicht berührt.

Das Zulaufrohr 12 durchsetzt nach Fig. 1 (aber auch Fig. 2) konzentrisch zur Drehachse des Rotors 2 das Gehäuse 1 und das eine Magnetlager 4, erstreckt sich sodann innerhalb des Gehäuses 1 axial weiter in die drehbare Trommel 3 und endet dort mit seinem andere Ende - einem freien Auslassende.

Das Zulaufrohr 12 mündet nach Fig. 1 und 2 jeweils in der Trommel 3 in einem mit der Trommel 3 drehbaren Verteiler 13. Der Verteiler 13 weist einen rohrartigen Verteilerschaft 14 auf und einen Verteilerfuß 15. Im Verteilerfuß 15 sind einer oder mehrere Verteilerkanäle 16 ausgebildet. Auf den Verteiler 13 kann ein Trenntellerstapel aus hier konischen Trenntellern 17 aufgesetzt sein. Der Verteiler 13 und die Trennteller 17 bestehen vorzugsweise ebenfalls aus Kunststoff.

Zudem dient sowohl nach Fig. 1 als auch nach Fig. 2 jeweils eine erste Schälscheibe 33 zum Ableiten der schwereren Phase HP der zwei Phasen HP und LP aus der Trommel 3. Ein Schälscheibenschaft bzw. ein zentrisches Ablaufrohr 34 durchsetzt dabei die zweite axiale Begrenzungswand 7 (siehe Fig. 1 und Fig. 2).

Die Trommel 3 weist hier nach einer möglichen - aber nicht zwingender - Ausgestaltung zumindest zwei zylindrische Abschnitte 18, 19 verschiedenen Durchmessers auf. An diese angrenzend können einer oder mehrere konische Übergangsbereiche an der Trommel 3 ausgebildet sein. Die Trommel 3 kann in ihrem mittleren axialen Bereich innen auch insgesamt einfach oder doppeltkonisch ausgebildet sein (hier nicht dargestellt).

Wie dargestellt, kann die Trommel 3 einen unteren zylindrischen Abschnitt 20 geringeren Durchmessers aufweisen, an/in dem auch die Rotoreinheit 5b des unteren Magnetlagers ausgebildet ist, das in einen konischen Bereich 20a übergeht, dann hier einen beispielsweise zylindrischen Bereich 19 größeren Durchmessers, dann wieder einen konischen Bereich 18a und dann einen oberen zylindrischen Abschnitt 18 geringeren Durchmessers auf, an dem die Rotoreinheit 4b des obere Magnetlagers 4 ausgebildet ist.

In Hinsicht auf die Ableitung der leichteren Phase unterschieden sich die Separatoreinsätze der Fig. 1 und 2.

Öffnungen (die an der Trommel 3 umfangsverteilt vorgesehen sein können, wobei an der Trommel 3 somit jeweils mehrere Öffnungen vorgesehen sein können) dienen nach Fig. 1 als radiale oder tangentiale Auslasse 21 der leichten Phase LP aus der Trommel 3. Eine Öffnung im Gehäuseaußenmantel ermöglicht nach dem Ausführungsbeispiel der Fig. 1 sodann den Auslass bzw. dient als Ablauf 10 der leichteren sich bei der zentrifugalen Trennung bildenden Produktphase LP, die aus der Trommel 3 ausgeleitet worden ist.

Die ersten Auslasse 21 auf dem Radius ro der Trommel 3 sind insbesondere als "düsenartige" Öffnungen im Außenmantel der Trommel 3 ausgebildet. Sie sind zudem als sogenannte "freie" Abläufe aus der Trommel 3 ausgebildet. Dabei dienen die ersten Auslasse 21 zum Ableiten der leichteren Phase LP. Dabei können die Auslasse so gestaltet sein, dass die leichte Phase radial austritt oder aber alternativ auch so ausgeformt sein, dass die leichte Phase tangential gegen die Drehrichtung der Trommel austritt und somit zum Antrieb des Rotors und zur Reduzierung der Antriebsenergie beiträgt. Diese aus der Trommel 3 austretende Phase wird im Gehäuse 1 in einer oberen Fang-Ringkammer 23 des Gehäuses 1 aufgefangen. Diese Fang-Ringkammer 23 ist derart ausgestaltet, dass die in ihr aufgefangene Phase zu dem Ablauf 10 der Fang-Ringkammer 23, geleitet wird. Dies kann dadurch erreicht werden, dass der Ablauf 10 an jeweils tiefster Stelle der Fang-Ringkammer 23 liegt. Die Fang-Ringkammer 23 ist radial nach innen zur rotierenden Trommel 3 hin offen und derart beabstandet ausgebildet, dass aus dem jeweiligen Auslass 21 ausspritzende Flüssigkeit während der zentrifugalen Trennung im Wesentlichen nur in die zugehörige - auf gleichem axialen Niveau liegende - Fang-Ringkammer 23 gespritzt wird.

Unterhalb der Fang-Ringkammer 23 kann optional eine nicht zur Ableitung einer Phase dienende Kammer 25 ausgebildet sein. Diese Kammer 25 kann optional einen (hier nicht dargestellten) Leckageablauf aufweisen. Die Leckage kann frei, vorzugsweise in ein Behältnis, ablaufen. Sie kann aber auch durch Unterdruck abgesaugt werden, wenn die Kammer 25 einen Unterdruckanschluss zum Anschluss einer Unterdruck erzeugenden Einrichtung aufweist.

Die erste Fang-Ringkammer 23 und die Kammer 25 können durch eine erste hier konische Wand 26 voneinander getrennt sein, die ausgehend von dem Außenmantel des Gehäuses 1 konisch nach innen sowie oben verläuft und innen beabstandet zur Trommel 3 radial vor dieser endet.

Vorzugsweise am tiefsten Punkt der Fang-Ringkammer wird die Produktphase LP durch den Ablauf 10 aus dem Gehäuse 1 abgeleitet. Es können Stutzen im Bereich des Ablaufs 10 außen am Gehäuse 1 vorgesehen sein, um einfach Leitungen, Schläuche und dgl. anschließen zu können.

Diese können wiederum an dem Gehäuse 1 direkt mit ausgebildet sein oder klebend an diesem angebracht sein. Die Stutzen bestehen vorzugsweise ebenfalls aus Kunststoff. Das Gehäuse 1 kann aus mehreren Kunststoffteilen zusammengesetzt sein, die beispielsweise klebend oder schweißend miteinander abgedichtet verbunden sind.

Als (hier zweiter) Auslass für die schwerere Phase HP aus der Trommel (durch das Gehäuse 1 hindurch) ist nach Fig. 1 und 2 jeweils die erste Schälscheibe 33 vorgesehen, die sich im Wesentlichen radial erstreckt und in ein axial verlaufendes Ablaufrohr 34 als Schälscheibenschaft übergeht, das die untere axiale Begrenzungswand 7 des Gehäuses 1 durchsetzt. Die Schälscheibe 33 weist einen Außendurchmesser ru auf. Dabei gilt ru > ro. Die Einlassöffnungen 33a der Schälscheibe 33 liegen somit auf einem größeren Durchmesser bzw. Radius ru als die Auslasse 21 für die leichte Phase LP auf dem Radius ro. Damit ist es möglich, mit der Schälscheibe 33 eine relativ zur leichteren Phase LP schwerere Phase HP aus der Trommel 3 abzuleiten. Die Schälscheibe 33 steht im Betrieb des Separators still und taucht mit ihrem äußeren Rand in die in der Trommel 3 rotierende schwerere Phase HP.

Durch die Kanäle in der Schälscheibe 33 wird die Phase HP nach innen abgeleitet. Die Schälscheibe 33 dient somit der Ableitung der Phase HP nach Art einer Zentripetalpumpe.

Die Schälscheibe 33 kann auf einfache und kompakte Weise in der Trommel 3 unterhalb des Verteilers 14 und unterhalb des Tellerpakets 17 angeordnet sein. Der Radius ru entspricht der Eintauchtiefe der Schälscheibe 33.

Das Ableitungsrohr 34 ist mit einem Ende aus dem Gehäuse 1 nach unten aus der Trommel und durch die untere Begrenzungswand 7 herausgeführt ist, wobei es die Trommel 3 dabei aber nicht berührt. Das Ableitungsrohr 34 kann einstückig mit dem Gehäuse 1 ausgebildet sein oder abgedichtet in dieses eingesetzt sein. An das Ableitungsrohr kann sich ein Schlauch oder dgl. als Ableitung 35 anschließen.

Das Ableitungsrohr durchsetzt konzentrisch zur Drehachse D des Rotors 2 das Gehäuse 1 und das untere Magnetlager 5, erstreckt sich sodann innerhalb des Gehäuses 1 axial weiter bis in die Schälscheibe 33.

Es kann vorgesehen sein, dass in den Auslauf für die schwere Phase HP, insbesondere in die Ableitung 35 für die schwerere Phase HP in steuerbares, insbesondere elektrisch steuerbares, Regelventil 36 eingesetzt ist. Durch das Regelventil 36 kann der Volumenstrom der schweren Phase HP in der Ableitung 35 gedrosselt werden und die Eintauchtiefe der zugehörigen Schälscheibe vergrößert werden. Es ist vorzugsweise eine Steuervorrichtung 37 vorgesehen. Das Regelventil 36 ist vorzugsweise mit der Steuervorrichtung 37 drahtlos oder drahtgebunden verbunden.

Die Steuereinrichtung 37 kann auch zur Steuerung der Magnetlager 4, 5 und des Antriebs ausgelegt und vorgesehen sein.

Nach Fig. 2 wird auch die leichte Phase LP über eine Schälscheibe ausgetragen.

Dazu ist im hier oberen Bereich der Trommel 3 eine Schälscheibe 22 vorgesehen, deren Einlassöffnungen 22a wiederum auf einem kleineren Radius ro als der Radius ru des Einlasses der ersten - unteren - Schälscheibe 33 für die schwerere Phase liegen kann.

Der Schaft dieser Schälscheibe 22 kann ringkanalartig wie ein äußeres Ablaufrohr 24 das Zulaufrohr 8 umgeben und statt des Zulaufrohres 8 dicht mit dem Gehäuse 1 verbunden oder einstückig mit diesem ausgebildet sein. Die Ablaufrohre 24, 34 der beiden Schälscheiben 22, 33 sind somit nach Fig. 2 an gegenüberliegenden Enden der Trommel 3 aus dieser herausgeführt. Sie sind ferner an gegenüberliegenden Enden des Gehäuses 1 aus diesem herausgeführt. Sie können abgedichtet in das Gehäuse 1 eingesetzt sein. Sie können aber auch einstückig mit diesem aus Kunststoff gefertigt sein. Das Zulaufrohr 12 kann am oberen Ende des Schälscheibenschafts 24 mit diesem verbunden sein. Aus dem Schälscheibenschaft 24 kann ein radialer oder tangentialer Anschlussstutzen 24a herausgeführt sein. An diesen ist eine Ableitung 40 zur Ableitung der leichten Phase anschließbar, die z.B. in einen Beutel oder Tank dgl. münden kann. Entsprechend können die Enden der Rohre 12 und 34 auch als Stutzen zum Anschluss von Schläuchen oder dgl. ausgebildet sein (Fig.2, aber auch Fig. 1).

Es kann vorgesehen sein, dass auch in die Ableitung 40 für die leichte Phase LP ein steuerbares, insbesondere elektrisch steuerbares, Regelventil 39 eingesetzt ist.

Durch das Regelventil 39 kann der Volumenstrom der leichten Phase LP verändert, insbesondere mehr oder weniger gedrosselt werden und damit die Eintauchtiefe der zweiten Schälscheibe 22 verändert werden. Auch das Regelventil 39 ist mit der Steuervorrichtung 37 drahtlos oder drahtgebunden verbunden, so dass es von der Steuervorrichtung 37 ansteuerbar ist.

Bei der jeweiligen Schälscheibe 22, 33 handelt es sich jeweils um eine mit mehreren, beispielsweise mit ein bis sechs, Kanälen versehene zylindrische und im Wesentlichen radial ausgerichtete Scheibe, die im Betrieb still steht und Kanäle aufweist, so dass eine Art Zentripetalpumpe gebildet wird. Die jeweilige Schälscheibe 22 bzw. 33 taucht mit ihrem äußeren Rand in die in dem Separator rotierende Phase LP bzw. HP ein. Durch die Kanäle in der Schälscheibe wird die jeweilige Phase LP, HP nach innen abgeleitet und die Rotationsgeschwindigkeit der jeweiligen Phase LP, HP in Druck umgesetzt. Die jeweilige Schälscheibe 22, 33 ersetzt so eine Ablaufpumpe für die jeweilige Phase LP, HP. Die Schälscheiben arbeiten somit jeweils als Zentripetalpumpe. Sie können aus Kunststoff bestehen.

Es könnte theoretisch auch eine dritte Schälscheibe vorgesehen sein, die zum Ableiten einer weiteren Phase dienen könnte.

Nachfolgend sei der Betrieb der Separatoren nach Fig.1 und dann nach Fig. 2 kurz beschrieben.

Zunächst wird der jeweilige Separator mit seinen Mehrwegkomponenten bzw. wiederverwendbaren Komponenten bereitgestellt. Dazu gehören das Gestell I sowie die Antriebs- und Statoreinheiten 4a, 5a der Magnetlagereinrichtungen. Dazu gehört ferner eine Steuerungseinheit 37. Sodann wird ein Separatoreinsatz II bereitgestellt und am Gestell I montiert. Dazu müssen lediglich die Statoreinheiten 4a und 5a auseinander bewegt werden. Sodann wird der Separatoreinsatz formschlüssig eingesetzt und die Statoreinheiten werden aufeinander zu bewegt. Damit ist das Gehäuse sicher drehfest gehalten. Jetzt werden ggf. noch Schläuche an die Stutzen angeschlossen, die in Tanks oder Beuteln münden. Der jeweilige Separatoreinsatz der Fig.1 und 2 kann daher vorzugsweise zumindest auch Schläuche und Stutzen aufweisen, die an (hier nicht dargestellte) weitere Leitungen sowie Behälter wie Beutel, Tanks, Pumpen und dgl. anschließbar sein können.

Sodann wird nach einem Anschluss der Leitungen und Schläuche und dgl. eine Suspension in die rotierende Trommel geleitet (Zulauf 8) und dort zentrifugal in die leichte Phase LP und die schwere Phase HP getrennt.

Die schwerere Phase HP größerer Dichte strömt in der Trommel 3 im Trennraum radial nach außen. Dort verlässt die Phase HP die Trommel auf einem Radius ru durch die Kanäle der stillstehenden Schälscheibe 33.

Die leichtere Phase LP strömt in der Trommel 3 im Trennraum radial nach innen und steigt durch einen Kanal 38 an einem Schaft des Verteilers nach oben. Dort verlässt die Phase LP die Trommel nach Fig. 1 und 2 jeweils auf einem Radius ro.

Mit dem oder den Regelventilen 36, 39 kann dabei auf einfache Weise auf den Trennprozess Einfluss genommen werden. Dies resultiert in einer Optimierung des Trennprozesses.

Als Hauptanwendung des erfindungsgemäßen Separators sind Zellabtrennungen in der pharmazeutischen Industrie vorgesehen. Der Leistungsbereich ist gedacht für die Verarbeitung von Brühen aus Fermentern in der Größenordnung von 100 l - 4000 l sowie für Laboranwendungen.

Denkbar wären auch andere Bereiche der Industrie, in denen Separatoren zum Einsatz kommen: Chemie, Pharmazie, Molkereitechnik, nachwachsende Rohstoffe, Öl und Gas, Getränketechnik, Mineralöl, usw.

Die dargestellten Separatoren ermöglichen die Herstellung eines Separatoreinsatzes, bei dem vorzugsweise alle produktberührenden Komponenten aus Kunststoff oder anderen nichtmagnetischen Werkstoffen gefertigt sein können, die nach einmaligem Gebrauch entsorgt oder einem Recyclingprozess zugeführt werden können. Eine Reinigung nach Benutzung entfällt somit. Der Separator und dessen Betrieb können damit kostengünstig umgesetzt werden.

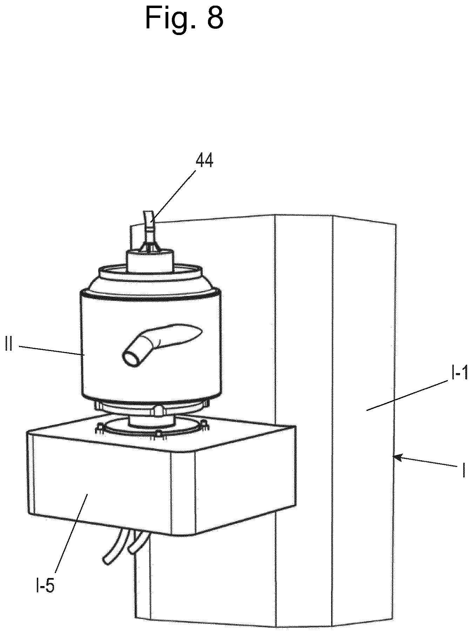

Fig. 8 zeigt eine Abwandlung eines Separatoreinsatzes II der Fig. 1-7 in einer zweiten Ausführungsvariante, wobei identische Merkmale mit analogen Bezugszeichen versehen sind. Die Besonderheit dieser zweiten Ausführungsvariante ist, dass das oder die Formschlussmittel wie beispielsweise die Stifte 41 an der Aufnahme I-5 und die entsprechenden am Gestell I vorgesehenen Formschlussmittel lediglich einseitig zwischen dem Gestell I und dem Separatoreinsatz II vorgesehen sind und dadurch ebenfalls eine Axial- und Verdrehsicherung des Separatoreinsatzes II gegenüber dem Gestell I ermöglicht wird. Dadurch verringert sich u.a. die Komplexität des Aufbaus.

**Bezugszeichen**

| | |
|---|---|
| Gestell | I |
| Konsole | I-1 |
| Wagen | I-2 |
| Rollen | I-3 |
| Aufnahmen | I-4, I-5 |
| Separatoreinsatz | II |
| Gehäuse | 1 |
| Rotor | 2 |
| Trommel | 3 |
| Magnetlagereinrichtungen | 4, 5 |
| Statoreinheiten | 4a, 5a |
| Rotoreinheit | 4b, 5b |
| radiale Begrenzungswand | 6, 7 |
| Zulauf | 8 |
| Ablauf | 10 |
| Zulaufrohr | 12 |
| Öffnung | 12a |
| Verteiler | 13 |
| Verteilerschaft | 14 |
| Verteilerfuß | 15 |
| Verteilerkanal | 16 |
| Trennteller | 17 |
| zyl. Abschnitte | 18, 19, 20 |
| kon. Abschnitte | 18a, 20a |
| Auslasse | 21 |
| Schälscheibe | 22 |
| Einlassöffnungen | 22a |
| Fang-Ringkammer | 23 |
| Ablaufrohr | 24 |
| Anschlussstutzen | 24a |
| Kammer | 25 |
| Konische Wand | 26 |
| Schälscheibe | 33 |
| Einlassöffnungen | 33a |
| Ablaufrohr | 34 |
| Ableitung | 35 |
| Regelventil | 36 |
| Steuereinrichtung | 37 |
| Kanal | 38 |
| Regelventil | 39 |
| Ableitung | 40 |
| Stifte | 41, 41a |
| Ausnehmungen | 41b |
| Ausnehmungen | 42 |
| Durchgangsöffnung | 43 |
| Schläuche | 44, 45 |
| Drehachse | D |
| Suspension | S |
| Phasen | LP, HP |
| Radien | ro, ru |

## Patentansprüche

1. Separator mit einem Gestell (I) und einem an dem Gestell wechselbar angeordneten Separatoreinsatz (II),
a) wobei der Separatoreinsatz zur Trennung einer fließfähigen Suspension (S) in einem Zentrifugalfeld in wenigstens zwei fließfähige Phasen (LP, HP) verschiedener Dichte ausgelegt ist und eine vormontierte, wechselbare Einheit zum Einsetzen in Statoreinheiten am Gestell des Separators bildet und zumindest folgendes aufweist:
i. ein im Betrieb stillstehendes Gehäuse (1), das nach Art eines Behälters ausgelegt ist, der bis auf eine oder mehrere Öffnungen geschlossen ausgelegt ist,
ii. einen innerhalb des Gehäuses (1) angeordneten und um eine Drehachse (D) drehbaren Rotor (2) mit einer Trommel (3), welche eine oder mehrere Öffnungen aufweist,
iii. vorzugsweise ein in der Trommel (3) angeordnetes Trennmittel,
iv. zumindest zwei Rotoreinheiten (4b, 5b) für Magnetlagereinrichtungen (4, 5) an zwei axial beabstandeten Stellen des Rotors (2) mit der Trommel, mit welchen der Rotor (2) mit der Trommel (3) im Betrieb innerhalb des Gehäuses in der Schwebe haltbar, drehbar lagerbar und in Drehung versetzbar ist,
b) wobei ferner an dem Gestell (I) voneinander beabstandete Aufnahmen (I-4, I-5) mit Statoreinheiten (4a, 5a) der Lagereinrichtungen (4, 5) ausgebildet sind, zwischen welchen das Gehäuse (1) des Separatoreinsatzes drehfest gehalten ist, so dass der Rotor (2) mit der Trommel drehbar bleibt,
c) wobei die relative Lage der Aufnahmen (I-4 und I-5) mit den Statoreinheiten (4a, 5a) der Lagereinrichtungen (4, 5) derart veränderbar, dass der Separatoreinsatz (II) auswechselbar ist,
d) wobei das Gehäuse (1) und zumindest eine der Aufnahmen (I-4 und I-5) korrespondierende Formschlussmittel aufweisen, um das Gehäuse (1) drehfest an der Aufnahme zu halten.

2. Separator nach Anspruch 1, **dadurch gekennzeichnet, dass** das Gehäuse (1) und die Aufnahmen (I-4 und I-5) korrespondierende Formschlussmittel aufweisen, um das Gehäuse (1) drehfest an den Aufnahmen zu halten.

3. Separator nach Anspruch 1, **dadurch gekennzeichnet, dass** das Gehäuse (1) und lediglich Aufnahmen (I-4 oder I-5) korrespondierende Formschlussmittel aufweisen, um das Gehäuse (1) drehfest an der jeweiligen Aufnahme zu halten.

4. Separator nach Anspruch 1, **dadurch gekennzeichnet, dass** das Gehäuse (1) und die Aufnahmen (I-4 und I-5) als korrespondierende Formschlussmittel korrespondierende Stifte (41, 41a) und Ausnehmungen (41b, 42) aufweisen, um das Gehäuse (1) drehfest an den Aufnahmen (I-4 und I-5) zu halten.

5. Separator nach einem der vorstehenden Ansprüche, **dadurch gekennzeichnet, dass** der relative Abstand der beiden Aufnahmen (I-4, I-5) zueinander verstellbar ist.

6. Separator nach einem der vorstehenden Ansprüche, **dadurch gekennzeichnet, dass** die eine der beiden Aufnahmen (I-4) verstellbar an dem Gestell, insbesondere an der Konsole (I-1), angeordnet ist und dass die andere Aufnahme (I-5) ortsfest an dem Gestell, insbesondere an der Konsole (I-1), ausgebildet ist.

7. Separator nach einem der vorstehenden Ansprüche, **dadurch gekennzeichnet, dass** beide Aufnahmen (I-4, I-5) verstellbar an dem Gestell (1), insbesondere an der Konsole (I-1), angeordnet ist.

8. Separator nach einem der vorstehenden Ansprüche, **dadurch gekennzeichnet, dass** eine oder beide Aufnahmen (I-4) verschieblich an dem Gestell insbesondere an der Konsole (I-1), angeordnet ist/sind.

9. Separator nach einem der vorstehenden Ansprüche, **dadurch gekennzeichnet, dass** ein oder mehrere axial ausgerichtete(r) Schlauch/Schläuche (44, 45) an dem Separatoreinsatz (I) durch eine Durchgangsöffnung (43) der jeweils axial zugehörigen Aufnahme (I-4, I-5) geführt ist.

10. Separator nach einem der vorstehenden Ansprüche, **dadurch gekennzeichnet, dass** das Gestell (I) eine Steuereinrichtung (37) aufweist.

11. Separatoreinsatz zur Trennung einer fließfähigen Suspension (S) in einem Zentrifugalfeld in wenigstens zwei fließfähige Phasen (LP, HP) verschiedener Dichte, der eine vormontierte, wechselbare Einheit zum Einsetzen in Statoreinheiten am Gestell des Separators bildet und zumindest folgendes aufweist:
i. ein im Betrieb stillstehendes Gehäuse (1), das nach Art eines Behälters ausgelegt ist, der bis auf eine oder mehrere Öffnungen geschlossen ausgelegt ist,
ii. einen innerhalb des Gehäuses (1) angeordneten und um eine Drehachse (D) drehbaren Rotor (2) mit einer Trommel (3), welche eine oder mehrere Öffnungen aufweist,
iii. ein der Trommel (3) angeordnetes Trennmittel,
iv. zumindest zwei Rotoreinheiten (4b, 5b) für Magnetlagereinrichtungen (4, 5) an zwei axial beabstandeten Stellen des Rotors (2) mit der Trommel (3), mit welchen der Rotor (2) mit der Trommel (3) im Betrieb innerhalb des Gehäuses (1) in der Schwebe haltbar, drehbar lagerbar und in Drehung versetzbar ist, wobei das Gehäuse (1) Formschlussmittel aufweist, um das Gehäuse (1) drehfest an einem Widerlager wie einem Gestell zu halten.

12. Verfahren zum Wechseln eines ersten Separatoreinsatzes eines Separators nach einem der Ansprüche 1 bis 8 gegen einen zweiten Separatoreinsatz, mit folgenden Schritten:
a) Bereitstellen des Separators mit einem ersten am Gestell (I) montierten ersten Separatoreinsatz (II),
b) Ändern der relativen Lage der Aufnahmen (I-4, I-5) und Lösen des Formschlusses zwischen Gestell und Separatoreinsatz und Herausnehmen des ersten Separatoreinsatzes (II) aus den Aufnahmen;
c) Bereitstellen des zweiten Separatoreinsatzes;
d) Einsetzen des anderen zweiten Separatoreinsatzes in die eine der Aufnahmen, so dass die korrespondierenden Formschlussmittel an einem Ende des Gehäuses und an einer der Aufnahmen ineinander greifen; und
e) Erneutes Ändern der relativen Lage der Aufnahmen (I-4, I-5), bis die korrespondierenden Formschlussmittel an beiden Enden des Gehäuses (1) und an den beiden Aufnahmen (I-4, I-5) drehfest ineinander greifen.

13. Verfahren nach Anspruch 12, **dadurch gekennzeichnet, dass** beim Einsetzen des Separatoreinsatzes einer oder mehrere axial abgehende Schläuche (44, 45) an dem Separatoreinsatz durch eine Durchgangsöffnung (43) der jeweiligen axial zugehörigen Aufnahme geführt werden

14. Verfahren zum Betrieb eines Separators nach einem der vorhergehenden Ansprüche 1 bis 10, **dadurch gekennzeichnet, dass** im Betrieb des Separators eine Leckageleitung aus dem Separator, insbesondere über einen gesonderten Leckageablauf des Separatoreinsatzes, erfolgt.

15. Verwendung eines Behältnisses in einem Separator nach einem der vorhergehenden Ansprüche 1 bis 10, wobei das Behältnis wechselbar an einem Leckageablauf eines Separatoreinsatzes angeordnet ist.

## Claims

1. Separator having a frame (I) and a separator insert (II) exchangeably arranged on the frame,
a) wherein the separator insert is designed to separate a flowable suspension (S) into at least two flowable phases (LP, HP) of different density in a centrifugal field and forms a pre-assembled, exchangeable unit for insertion into stator units on the frame of the separator and comprises at least the following:
i. a housing (1) which is stationary in operation and is designed in the manner of a container which is closed except for one or more openings,
ii. a rotor (2) arranged inside the housing (1) and rotatable about an axis of rotation (D), having a drum (3) which has one or more openings,
iii. preferably a separating means arranged in the drum (3),
iv. at least two rotor units (4b, 5b) for magnetic bearing devices (4, 5) at two axially spaced locations of the rotor (2) with the drum, by means of which the rotor (2) with the drum (3) can be held in suspension, is rotatably supportable and can be made to rotate within the housing in operation,
b) wherein furthermore mutually spaced holders (I-4, I-5) having stator units (4a, 5a) of the bearing devices (4, 5) are formed on the frame (I), between which holders the housing (1) of the separator insert is non-rotatably retained such that the rotor (2) remains rotatable with the drum,
c) wherein the relative position of the holders (I-4 and I-5) having the stator units (4a, 5a) of the bearing devices (4, 5) can be changed such that the separator insert (II) can be exchanged,
d) wherein the housing (1) and at least one of the holders (I-4 and I-5) have corresponding interlocking elements in order to non-rotatably retain the housing (1) on the holder.

2. Separator according to claim 1, **characterized in that** the housing (1) and the holders (I-4 and I-5) have corresponding interlocking elements to non-rotatably retain the housing (1) on the holders.

3. Separator according to claim 1, **characterized in that** the housing (1) and only holders (I-4 or I-5) have corresponding interlocking elements for retaining the housing (1) non-rotatably on the respective holder.

4. Separator according to claim 1, **characterized in that** the housing (1) and the holders (I-4 and I-5) have corresponding pins (41,41a) and recesses (41b,42) as corresponding interlocking elements to retain the housing (1) non-rotatably on the holders (I-4 and I-5).

5. Separator according to one of the preceding claims, **characterized in that** the relative distance between the two holders (I-4, I-5) is adjustable.

6. Separator according to one of the preceding claims, **characterized in that** one of the two holders (I-4) is arranged adjustably on the frame, in particular on the console (I-1), and **in that** the other holder (I-5) is formed in a stationary manner on the frame, in particular on the console (I-1).

7. Separator according to one of the preceding claims, **characterized in that** both holders (I-4, I-5) are adjustably arranged on the frame (1), in particular on the console (I-1).

8. Separator according to one of the preceding claims, **characterized in that** one or both holders (I-4) is/are displaceably arranged on the frame, in particular on the console (I-1).

9. Separator according to one of the preceding claims, **characterized in that** one or more axially aligned hose(s) (44, 45) is/are guided on the separator insert (I) through a passage opening (43) of the respective axially associated holder (I-4, I-5).

10. Separator according to one of the preceding claims, **characterized in that** the frame (I) comprises a control device (37).

11. Separator insert for separating a flowable suspension (S) in a centrifugal field into at least two flowable phases (LP, HP) of different density, forming a pre-assembled, exchangeable unit for insertion into stator units on the frame of the separator and comprising at least the following:
i. a housing (1) which is stationary in operation and is designed in the manner of a container which is closed except for one or more openings,
ii. a rotor (2) which is arranged inside the housing (1), is rotatable about an axis of rotation (D), and comprises a drum (3) which has one or more openings,
iii. a separating means arranged to the drum (3),
iv. at least two rotor units (4b, 5b) for magnetic bearing devices (4, 5) at two axially spaced locations of the rotor (2) having the drum (3), by means of which the rotor (2) having the drum (3) can be held in suspension, is rotatably supportable and can be made to rotate within the housing (1) during operation, wherein the housing (1) has interlocking elements for non-rotatably retaining the housing (1) on an abutment such as a frame.

12. Method for exchanging a first separator insert of a separator according to one of claims 1 to 8 for a second separator insert, comprising the following steps:
a) providing the separator with a first separator insert (II) mounted on the frame (I),
b) changing the relative position of the holders (I-4, I-5) and releasing the interlock between the frame and separator insert and removing the first separator insert (II) from the holders;
c) providing the second separator insert;
d) inserting the other second separator insert into the one of the holders so that the corresponding interlocking elements at one end of the housing and at one of the holders engage with each other; and
e) renewed changing of the relative position of the holders (I-4, I-5) until the corresponding interlocking elements at both ends of the housing (1) and non-rotatably engage into each other at the two holders (I-4, I-5).

13. Method according to claim 12, **characterized in that**, when the separator insert is inserted, one or more axially outgoing hoses (44, 45) on the separator insert are guided through a passage opening (43) of the respective axially associated holder.

14. Method for operating a separator according to one of the preceding claims 1 to 10, **characterized in that**, during operation of the separator, a leakage line is provided from the separator, in particular via a separate leakage outlet of the separator insert.

15. Use of a container in a separator according to one of the preceding claims 1 to 10, wherein the container is exchangeably arranged at a leakage outlet of a separator insert.

## Revendications

1. Séparateur muni d'un bâti (I) et d'un module de séparateur (II) disposé de façon interchangeable sur le bâti,
a) dans lequel le module de séparateur est conçu pour séparer une suspension fluide (S) en au moins deux phases fluides (LP, HP) de densité différente dans un champ centrifuge et forme une unité préassemblée et interchangeable à insérer dans des unités de stator sur le bâti du séparateur et comprend au moins :
i. un coffre (1) stationnaire en fonctionnement, qui est conçu à la manière d'une cuve fermée à l'exception d'une ou plusieurs ouvertures,
ii. un rotor (2) disposé à l'intérieur du coffre (1) et capable de rotation autour d'un axe de rotation (D), muni d'un tambour (3) qui comporte une ou plusieurs ouvertures,
iii. un moyen de séparation, de préférence, disposé dans le tambour (3),
iv. au moins deux unités de rotor (4b, 5b) pour des dispositifs de palier magnétique (4, 5) en deux points du rotor (2) muni du tambour distant dans le sens axial, avec lesquelles le rotor (2) muni du tambour (3) peut être retenu en suspension, supporté avec possibilité de rotation et entraîné en rotation à l'intérieur du coffre en fonctionnement,
b) dans lequel sont en outre formés sur le bâti (I) des logements (I-4, I-5) écartés les uns des autres avec des unités de stator (4a, 5a) des dispositifs de palier (4, 5), entre lesquels le coffre (1) du module de séparateur est retenu de façon fixe en rotation, de sorte que le rotor (2) reste capable de tourner avec le tambour,
c) dans lequel la position relative des logements (I-4 et I-5) avec les unités de stator (4a, 5a) des dispositifs de palier (4, 5) peut être modifiée de sorte que le module de séparateur (II) soit interchangeable,
d) dans lequel le coffre (1) et au moins un des logements (I-4 et I-5) présentent des moyens d'engagement positif qui se correspondent pour retenir le coffre (1) sur le logement de manière fixe en rotation.

2. Séparateur selon la revendication 1, **caractérisé en ce que** le coffre (1) et les logements (I-4 et I-5) comportent des moyens d'engagement positif qui se correspondent pour retenir le coffre (1) sur les logements de manière fixe en rotation.

3. Séparateur selon la revendication 1, **caractérisé en ce que** le coffre (1) et seulement des logements (I-4 ou I-5) comportent des moyens d'engagement positif qui se correspondent pour retenir le coffre (1) sur le logement en question de manière fixe en rotation.

4. Séparateur selon la revendication 1, **caractérisé en ce que** le coffre (1) et les logements (I-4 et I-5) comportent, comme moyens d'engagement positif qui se correspondent, des goupilles (41, 41a) et des creux (41b, 42) qui se correspondent pour retenir le coffre (1) sur les logements (I-4 et I-5) de manière fixe en rotation.

5. Séparateur selon l'une des revendications précédentes, **caractérisé en ce que** l'écart relatif entre les deux logements (I-4, I-5) peut être ajusté.

6. Séparateur selon l'une des revendications précédentes, **caractérisé en ce que** l'un des deux logements (I-4) est formé de façon ajustable sur le bâti, en particulier sur la console (I-1), et **en ce que** l'autre logement (I-5) est formé fixe sur le bâti, en particulier sur la console (I-1).

7. Séparateur selon l'une des revendications précédentes, **caractérisé en ce que** les deux logements (I-4, I-5) sont disposés de façon ajustable sur le bâti (1), en particulier sur la console (I-1).

8. Séparateur selon l'une des revendications précédentes, **caractérisé en ce qu'**un des logements (I-4) ou les deux sont disposés avec possibilité de translation sur le bâti, en particulier sur la console (I-1).

9. Séparateur selon l'une des revendications précédentes, **caractérisé en ce qu'**un ou plusieurs tuyaux (44, 45) orientés dans le sens axial sur le module de séparateur (I) sont passés à travers une ouverture de passage (43) du logement (I-4, I-5) correspondant à chacun dans le sens axial.

10. Séparateur selon l'une des revendications précédentes, **caractérisé en ce que** le bâti (I) comprend un dispositif de commande (37).

11. Module de séparateur pour la séparation d'une suspension fluide (S) en au moins deux phases fluides (LP, HP) de densité différente dans un champ centrifuge, qui forme une unité préassemblée et interchangeable à insérer dans des unités de stator sur le bâti du séparateur et comprend au moins :
i. un coffre (1) stationnaire en fonctionnement, qui est conçu à la manière d'une cuve fermée à l'exception d'une ou plusieurs ouvertures,
ii. un rotor (2) disposé à l'intérieur du coffre (1) et capable de rotation autour d'un axe de rotation (D), muni d'un tambour (3) qui comporte une ou plusieurs ouvertures,
iii. un moyen de séparation disposé dans le tambour (3),
iv. au moins deux unités de rotor (4b, 5b) pour des dispositifs de palier magnétique (4, 5) en deux points du rotor (2) muni du tambour distants dans le sens axial, avec lesquelles le tambour avec lequel le rotor (2) muni du tambour (3) peut être retenu en suspension, supporté avec possibilité de rotation et entraîné en rotation à l'intérieur du coffre en fonctionnement, le coffre comportant des moyens d'engagement positif qui se correspondent pour retenir le coffre (1) de manière fixe en rotation sur un contre-appui tel qu'un bâti.

12. Procédé pour remplacer un premier module de séparateur d'un séparateur selon l'une des revendications 1 à 8 par un deuxième module de séparateur, comprenant les étapes suivantes :
a) préparation du séparateur avec un premier module de séparateur (II) monté sur le bâti (I),
b) changement de la position relative des logements (I-4, I-5) et dégagement de l'engagement positif entre le bâti et le module de séparateur et retrait du premier module de séparateur (II) des logements ;
c) préparation du deuxième module de séparateur ;
d) insertion du deuxième module de séparateur dans l'un des logements, de sorte que les moyens d'engagement positif qui se correspondent se mettent en prise les uns dans les autres à une extrémité du coffre et sur un des logements, et
e) nouveau changement de la position relative des logements (I-4, I-5) jusqu'à ce que les moyens d'engagement positif qui se correspondent se mettent en prise les uns dans les autres de manière fixe en rotation aux deux extrémités du boîtier (1) et sur les deux logements (I-4, I-5).

13. Procédé selon la revendication 12, **caractérisé en ce que**, lors de l'insertion du module de séparateur, un ou plusieurs tuyaux (44, 45) partant dans le sens axial sont guidés sur le module de séparateur à travers une ouverture de passage (43) du logement correspondant à chacun dans le sens axial.

14. Procédé pour la conduite d'un séparateur selon l'une des revendications 1 à 10, **caractérisé en ce que**, pendant le fonctionnement du séparateur, les fuites sont acheminées hors du séparateur, en particulier par une évacuation séparée des fuites sur le module de séparateur.

15. Utilisation d'un récipient dans un séparateur selon l'une des revendications 1 à 10, dans laquelle le récipient est disposé de façon interchangeable sur une évacuation de fuites d'un module de séparateur.
